# EUROPEAN PATENT APPLICATION

(11) **EP 4 068 833 A1**
(43) Date of publication of application: **05.10.2022**
(21) Application number: 20893500.7
(22) Date of filing: 20.11.2020
(51) Int. Cl.: H04W 24/00, H04W 84/10

(54) **RESIN CONTAINER AND WIRELESS COMMUNICATION SYSTEM**

(30) Priority: 27.11.2019 JP 2019214249
(71) Applicant: FURUKAWA ELECTRIC CO., LTD., Chiyoda-ku Tokyo 100-8322 (JP)
(72) Inventor: HAMADA, Hiroki, Tokyo 100-8322 (JP); MITSUHASHI, Yuito, Tokyo 100-8322 (JP); KAGIMOTO, Taishi, Tokyo 100-8322 (JP); HATTORI, Nobuhiko, Tokyo 100-8322 (JP); MOCHIZUKI, Takahiro, Tokyo 100-8322 (JP)
(74) Representative: Winter, Brandl - Partnerschaft mbB
(86) International application number: PCT/JP2020/043496
(87) International publication number: WO 2021/106804

(57) **Abstract**

Provided are a resin container and a wireless communication system with which it is possible to efficiently manage the state of a wireless communication device installed in an underground space. A resin container 5 for accommodating cables such as a communication line 6 and an electric power line 7 comprises a container body 52 having an opening 51 that opens upward, a lid for closing off the opening 51, and a wireless tag 3 serving as an information processing device positioned in the lid 53 or the container body 52 and capable of wirelessly communicating with a terminal 40 serving as an external apparatus. The wireless tag 3: acquires, from a wireless communication device 2 positioned in the inside of the container body 52, information that relates to the maintenance of the wireless communication device 2; holds said information; and transmits said information relating to the maintenance to the terminal 40.

## Description

### TECHNICAL FIELD

The present invention relates to a resin container and a wireless communication system.

### BACKGROUND ART

Conventionally, radio base stations and the like are managed based on acquired information such as the intensity of the radio waves sent from the wireless communication device. Furthermore, in recent years, a technique of installing wireless communication devices in an underground space has also been known. For example, Japanese Unexamined Patent Application, Publication No. H8-97630 discloses a technique of communicating between wireless communication devices installed in an underground space and vehicles.

Patent Document 1: Japanese Unexamined Patent Application, Publication No. H8-97630

### DISCLOSURE OF THE INVENTION

### Problems to be Solved by the Invention

It is required to manage the states of the wireless communication devices installed in the underground space as well as the wireless communication devices installed at a high position, such as the roof of a building, etc.

It is, therefore, an object of the present invention to provide a resin container and a wireless communication system capable of efficiently managing the states of wireless communication devices installed in an underground space.

### Means for Solving the Problems

A resin container according to an embodiment of the present application is directed to a resin container accommodating a cable, the resin container including: a container body including an opening that opens upward; a lid that closes the opening; and an information processing apparatus that detects a change of the resin container from an initial installation state, and sends a detection result to outside.

Furthermore, the resin container further includes a management apparatus provided inside or outside of the resin container, and examining a change in a state of the resin container based on the detection result.

Furthermore, the information processing apparatus is communicable with an external apparatus, and acquires and retains information on maintenance of at least one wireless communication device disposed inside the container body from the wireless communication device, and the information processing apparatus sends the information on maintenance to the external apparatus.

Furthermore, the information processing apparatus acquires the information on maintenance from the wireless communication device at a predetermined timing.

Furthermore, the information on maintenance includes device information related to the wireless communication device and a radio wave strength upon communication between the wireless communication device and a mobile device.

Furthermore, the external apparatus is mounted on a moving body, and moves accompanying movement of the moving body, and the information processing apparatus sends the information on maintenance in response to a request from the external apparatus.

Furthermore, the moving body is a vehicle.

Furthermore, a wireless communication system according to an embodiment of the present invention is directed to a wireless communication system including a plurality of resin containers, the system including a management apparatus that stores the information on maintenance acquired from the external apparatus to be associated with each of the wireless communication devices disposed at different locations.

The management apparatus includes: a determination unit that determines whether maintenance is required for a wireless communication device based on the information on maintenance; an identification unit that identifies a location at which the wireless communication device is disposed based on the information on maintenance; a search unit that refers to a predetermined map, and searches the location identified by the identification unit; and an addition unit that adds a determination result by the determination unit to a location on the predetermined map searched by the search unit.

Furthermore, the predetermined map is a map in which road information having a situation which changes for every moment is updated in real time.

### Effects of the Invention

According to an exemplary embodiment of the present invention, it is possible to provide a resin container and a wireless communication system capable of efficiently managing the states of wireless communication devices installed in an underground space.

### BRIEF DESCRIPTION OF THE DRAWINGS

FIG. 1 is a diagram showing an outline of a wireless communication system according to an exemplary embodiment of the present invention.
FIG. 2 is a diagram showing an outline of a wireless communication device, a wireless tag, a vehicle, and a resin container according to the present embodiment.
FIG. 3 is a block diagram showing functions of the wireless communication system according to the present embodiment.
FIGS. 4a, 4b and 4c are a diagram showing an example of an area map according to the present embodiment.
FIG. 5 is a flowchart showing a flow of processing of a wireless tag as an information processing apparatus according to the present embodiment.
FIG. 6 is a flowchart showing a flow of processing of a management apparatus according to the present embodiment.

### PREFERRED MODE FOR CARRYING OUT THE INVENTION

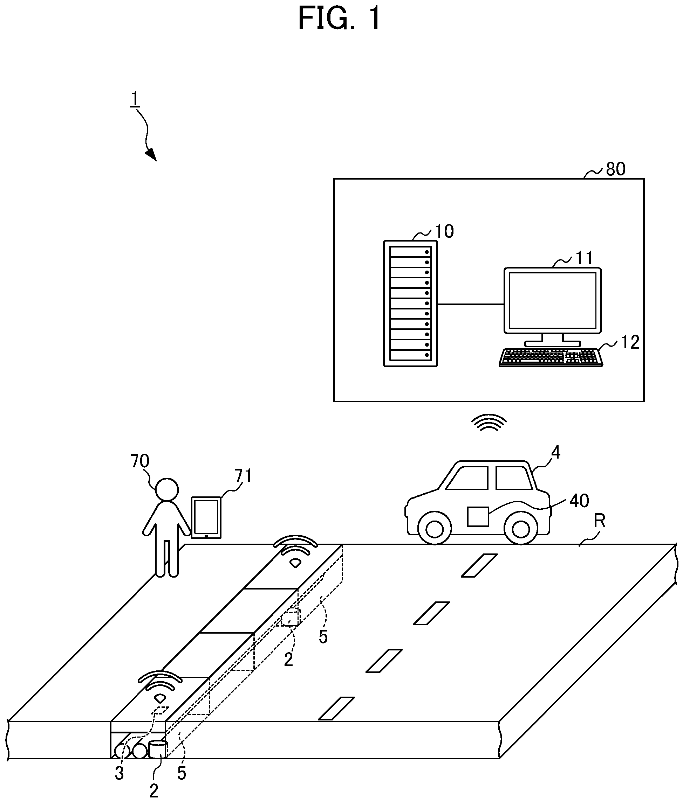

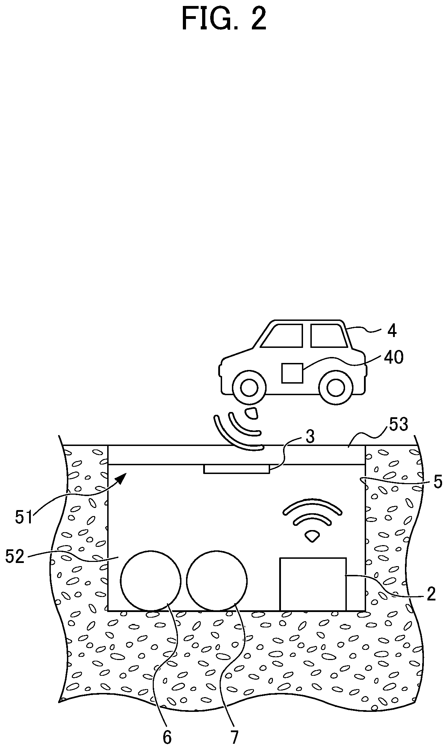

Embodiments of the present invention will be described below. FIG. 1 is a diagram showing an outline of a wireless communication system 1 according to the present invention. FIG. 2 is a diagram showing an outline of wireless communication devices 2, wireless tags 3, a vehicle 4, and resin containers 5 according to the present embodiment. The wireless communication system 1 is intended to manage the states of the wireless communication devices 2. The wireless communication devices 2 are installed at different locations in the underground space beneath the road R. As shown in FIG. 1, the wireless communication system 1 of the present embodiment includes the plurality of resin containers 5, a terminal 40, and a management apparatus 10. The plurality of resin containers 5 each include the wireless communication device 2 and the wireless tag 3. The terminal 40 is mounted on the vehicle 4. The management apparatus 10 communicates with the terminal 40.

The resin container 5 is buried in the ground for use. It should be noted that, in the present embodiment, as shown in FIG. 2, the resin container 5 has an exposed surface in a part of the lid 53, and the container body 52 is buried in the ground. However, the present invention is not limited thereto. In the present invention, the container body 52 may be disposed on the ground.

The resin container 5 is a container for accommodating cables such as a communication line 6 and a power line 7. The communication line 6 includes, for example, an optical fiber. It should be noted that the communication line 6 may include a coaxial cable. The wireless communication device 2 and the switching center (not shown) are connected by the communication line 6. The power line 7 is connected to the wireless communication device 2. The power line 7 supplies power to the wireless communication device 2.

The resin container 5 includes an opening 51, the container body 52, and the lid 53.

The container body 52 is buried in the ground. The container body 52 has the opening 51. The opening 51 opens upward. The lid 53 closes the opening 51 and seals the container body 52. The lid 53 includes a material that transmits radio waves sent and received between the wireless communication device 2 and a wireless communication apparatus. The lid 53 includes a material that transmits radio waves. The lid 53 is openable and closable in the opening 51.

The wireless communication device 2 is installed inside of the resin container 5. The wireless communication device 2 sends and receives signals for wireless communication with a mobile device 71. The mobile device 71 is carried by the user 70. The wireless communication device 2 is, for example, a base station apparatus for a fifth-generation mobile communication system (5G). However, the wireless communication device 2 is not limited to the base station apparatus for 5G. The mobile device 71 is, for example, a mobile phone, a smartphone, a tablet, or other apparatuses.

The wireless tag 3 is an information processing apparatus. The wireless tag 3 detects a change from the initial installation state of the resin container 5, and transmits a detection result to the outside. More specifically, the wireless tag 3 transmits information on maintenance of the wireless communication device 2 to the terminal 40. The wireless tag 3 of the present embodiment is disposed on the lid 53. In the present embodiment, the wireless tag 3 is disposed at a predetermined position inside the lid 53. The inside of the lid 53 corresponds to the side facing the opening 51 when the container body 52 is sealed. However, the present invention is not limited thereto. For example, the wireless tag 3 may be installed on the container body 52. It should be noted that the information on maintenance of the present embodiment will be described later.

The terminal 40 is mounted on the vehicle 4 as a moving body. The terminal 40 of the present embodiment can communicate wirelessly with the wireless tag 3. The terminal 40 sends a request signal to the wireless tag 3. The terminal 40 receives information on maintenance from the wireless tag 3. The vehicle 4 includes a drive system for running the vehicle. The vehicle 4 further includes a braking system or the like for stopping the vehicle. It should be noted that the vehicle 4 may be a motorcycle, a three-wheeled vehicle, a four-wheeled vehicle, or the like.

The management apparatus 10 is installed inside or outside of the resin container 5. The management apparatus 10 examines the change in the state of the resin container 5 based on the detection result. More specifically, the management apparatus 10 is a computer disposed in a facility 80. The facility 80 is located at a different location than the location where the wireless communication device 2 is located. The management apparatus 10 acquires information acquired by the terminal 40, the information relates to maintenance of the plurality of wireless communication devices 2. The plurality of wireless communication devices 2 are located at different locations. The management apparatus 10 distinguishes and manages these pieces of information for each wireless communication device 2. Furthermore, a display device 11 and an output device 12 are connected to the management apparatus 10. The administrator causes the display device 11 to display information relating to maintenance of the wireless communication device 2, an image such as a map to be described later, and the like. The administrator operates the output device 12.

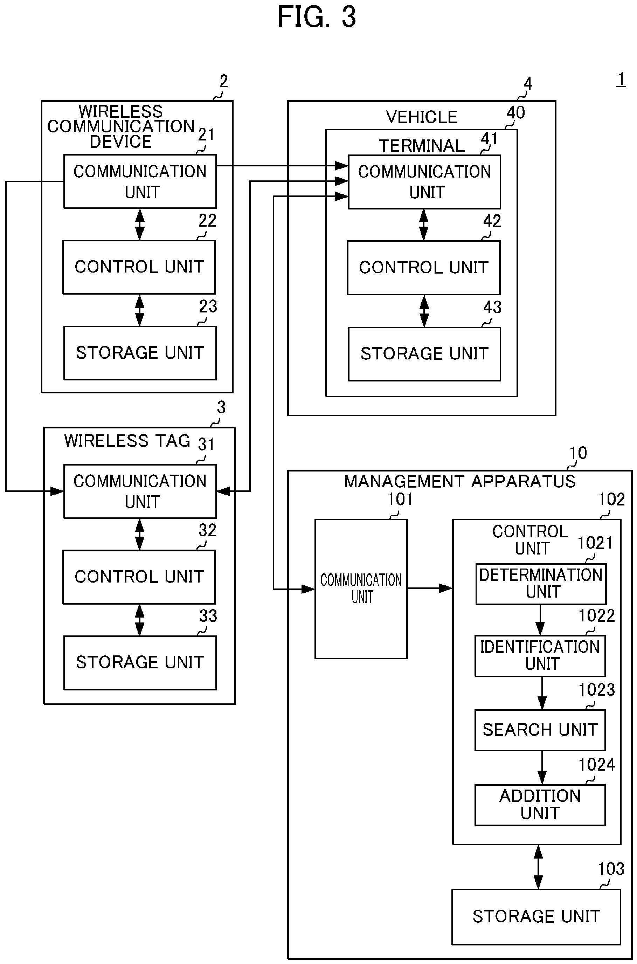

Next, the electrical configuration of each configuration included in the wireless communication system 1 will be described with reference to FIG. 3. FIG. 3 is a block diagram showing functions of the wireless communication system 1 of the present embodiment.

First, functions of the wireless communication device 2 will be described. The wireless communication device 2 includes a communication unit 21, a control unit 22, and a storage unit 23. The communication unit 21 includes, for example, an antenna and a communication processing circuit.

The communication unit 21 includes a transmission unit and a reception unit. The transmission unit and the reception unit send and receive signals for wireless communication with the wireless tag 3, the terminal 40, and the like.

The control unit 22 is a processor such as a CPU (Central Processing Unit). The control unit 22 executes various functions by executing programs stored in the storage unit 23.

The storage unit 23 is a storage device. The storage unit 23 includes, for example, ROM (Read Only Memory) that stores an OS (Operating System), application programs, and the like, RAM (Random Access Memory), and a hard disk drive and an SSD (Solid State Drive) that store various types of information. The storage unit 23 of the present embodiment stores device information as information relating to the wireless communication device 2. The device information includes the installation date, identification information (ID) and the like of the wireless communication device 2.

Next, functions of the wireless tag 3 will be described. The wireless tag 3 includes a communication unit 31, a control unit 32, and a storage unit 33.

The communication unit 31 includes a transmission unit and a reception unit for transmitting and receiving signals for wireless communication with the wireless communication device 2, the terminal 40, and the like. The communication unit 31 includes, for example, an antenna, a communication processing circuit, and the like.

The control unit 32 is a processor such as a CPU (Central Processing Unit). The control unit 32 executes various functions by executing programs stored in the storage unit 33.

The storage unit 33 includes ROM (Read Only Memory), RAM (Random Access Memory), and the like. The storage unit 33 stores various kinds of information. The storage unit 33 of the present embodiment stores information on maintenance. The wireless tag 3 acquires the information on maintenance from the wireless communication device 2 at a predetermined timing. The predetermined timing is, for example, an interval of a predetermined cycle such as several seconds, several minutes, or several hours. Furthermore, the information on maintenance includes the above-described device information, information indicating radio wave strength, and the like.

As described above, the device information includes the installation date, identification information (ID), and the like of the wireless communication device 2. The wireless communication device 2 identified by the device information is the wireless communication device 2 disposed in the same resin container 5 as the wireless tag 3. The wireless tag 3 stores the device information acquired at a predetermined timing or by a predetermined method in the storage unit 33. For example, the wireless tag 3 may communicate with the wireless communication device 2 to acquire device information. Alternatively, the device information may be stored in advance in association with a predetermined wireless communication device 2 at the time of manufacturing the wireless tag 3.

Radio wave strength is information indicating the intensity of the signal sent from the wireless communication device 2 to the mobile device 71. The wireless tag 3 stores, in the storage unit 33, information indicating a change in time of the radio wave strength acquired at a predetermined timing or by a predetermined method. As the information indicating the radio wave strength, RSSI (Received Signal Strength Indicator) within a certain period may be used.

Next, functions of the terminal 40 will be described. The terminal 40 includes a communication unit 41, a control unit 42, and a storage unit 43.

The communication unit 41 includes a transmission unit and a reception unit. The transmission unit and the reception unit send and receive signals for wireless communication with the wireless communication device 2, the management apparatus 10, and the like. The communication unit 41 includes, for example, an antenna, a communication processing circuit, and the like. Furthermore, the communication unit 41 includes a function as a wireless tag reader/writer capable of wirelessly communicating with the wireless tag 3.

The terminal 40 acquires information on maintenance at a predetermined timing. As described above, the terminal 40 is mounted on the vehicle 4 as a moving body. The terminal 40 can acquire information on maintenance from the wireless tag 3 via the communication unit 41 while moving with the movement of the vehicle 4.

The control unit 42 is a processor such as a CPU (Central Processing Unit). The control unit 42 executes various functions by executing programs stored in the storage unit 33.

The storage unit 43 is a storage device. The storage device includes ROM (Read Only Memory) for storing an OS (Operating System), application programs, and the like, RAM (Random Access Memory), and a hard disk drive an SSD (Solid State Drive), and the like for storing various types of information. The storage unit 43 of the present embodiment stores information related to maintenance acquired from the wireless tag 3.

The terminal 40 of the present embodiment sends the information on maintenance acquired at a predetermined timing to the management apparatus 10. The information on maintenance from the terminal 40 to the management apparatus 10 may be sent based on a request signal from the management apparatus 10. Furthermore, the information on maintenance from the terminal 40 to the management apparatus 10 may be sent at regular intervals. Furthermore, the information on maintenance from the terminal 40 to the management apparatus 10 may be sent by the operation of the terminal 40, such as a person on board the vehicle 4. As described above, the method of sending information to the management apparatus 10 is not limited.

Next, functions of the management apparatus 10 will be described. The management apparatus 10 includes a communication unit 101, a control unit 102, and a storage unit 103.

The communication unit 101 can perform wireless communication with the terminal 40. The communication unit 101 includes, for example, an antenna, a communication processing circuit, and the like.

The control unit 102 is a processor such as a CPU (Central Processing Unit). The control unit 102 executes various functions by executing programs stored in the storage unit 103.

The storage unit 103 is a storage device. The storage device includes ROM (Read Only Memory) for storing an OS (Operating System), application programs, and the like, RAM (Random Access Memory), and a hard disk drive, an SSD (Solid State Drive), and the like for storing various types of information. The storage unit 103 of the present embodiment stores the above-described information on maintenance for each of the wireless communication devices 2 disposed at different locations.

The control unit 102 of the present embodiment includes a determination unit 1021, an identification unit 1022, a search unit 1023, and an addition unit 1024. These are functional parts that create maps for visualizing the management state of the wireless communication device 2. Each function executed by the control unit 102 will be described below.

The determination unit 1021 determines whether or not maintenance is required for the wireless communication device 2 based on the information on maintenance. As described above, the information on maintenance of the present embodiment includes the apparatus information relating to the wireless communication device 2, and a radio wave strength which is information indicating the strength of the signal sent from the wireless communication device 2.

The determination unit 1021 determines whether or not maintenance is required based on the radio wave strength within a predetermined time period. As conditions for determining that maintenance is required, parameters indicating changes in radio wave strength such as threshold and rate of change can be used. The determination conditions may include, for example, a case where the radio wave strength exceeds or falls below a predetermined threshold value, a case where the rate of change is larger than that in the steady state, a case where the radio wave strength exhibits a discontinuous change in time, or the like. When a predetermined condition is not satisfied, the determination unit 1021 determines that maintenance is not required for the wireless communication device 2.

The identification unit 1022 identifies the location of the wireless communication device 2 on which the determination by the determination unit 1021 is performed based on the information on maintenance. For example, when the determination unit 1021 determines that maintenance is required for the wireless communication device 2, the identification unit 1022 identifies the location where the wireless communication device 2 is disposed based on the identification information (ID) included in the device information. It should be noted that the timing at which the identification unit 1022 identifies the location of the wireless communication device 2 is not limited to the timing after the determination by the determination unit 1021. The timing at which the identification unit 1022 identifies the location of the wireless communication device 2 may be before the start of the determination processing of the determination unit 1021. Alternatively, the identification unit 1022 may execute the identification process in parallel with the determination of the determination unit 1021.

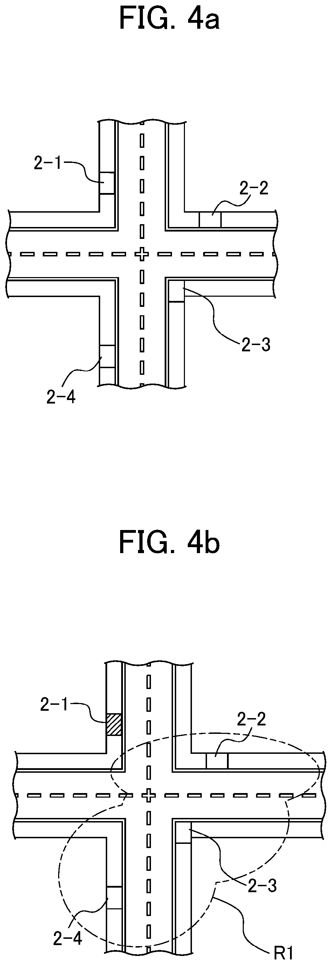

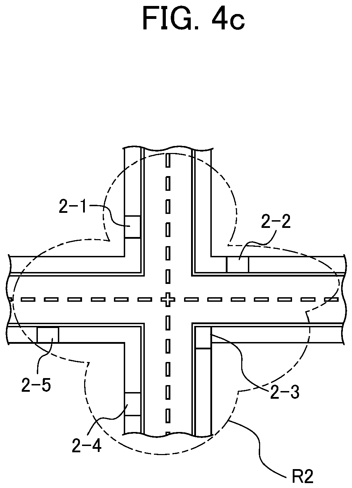

The search unit 1023 refers to a predetermined map and searches for the location identified by the identification unit 1022. An example of a predetermined map will be described with reference to FIGS. 4a, 4b and 4c. FIGS. 4 a, 4b and 4c are an example of a map in which the state of the wireless communication device 2 is visualized by the wireless communication system 1 of the present embodiment. Each of FIGS. 4a to 4c shows a plurality of wireless communication devices 2-1, 2-2, 2-3, and 2-4. Each of these plurality of wireless communication devices is buried in a different location in the sidewalk portion of the road. It should be noted that predetermined map is a map in which road information having a situation which changes every moment is updated in real time. The road information includes, for example, dynamic information indicating the movement of the vehicle 4, associative static information such as road construction and events, and static information such as roads and structures on roads.

FIG. 4a schematically shows a map before an actual state of the wireless communication devices 2-1 to 2-4 is reflected. The search unit 1023 searches the map for the location of the wireless communication device 2 identified by the identification unit 1022. In FIG. 4a, the locations of the wireless communication devices 2-1 to 2-4 are identified.

The addition unit 1024 adds a determination result (information on whether maintenance is required or not) by the determination unit 1021 to a predetermined location on the map searched by the search unit 1023 in such a manner that the determination result can be visually identified.

FIG. 4b schematically shows a map in which information indicating whether maintenance is required for the wireless communication devices 2-1 to 2-4 is visually added by the addition unit 1024. The addition of information to the map may include, for example, changing colors, and marking. This provides visually distinguishable information. For example, the addition unit 1024 displays the wireless communication device 2 that does not require maintenance in blue, and displays the wireless communication device 2 that requires maintenance in red at the locations on the map searched by the search unit 1023 as a result of the determination by the determination unit 1021. In the example shown in FIG. 4b, the wireless communication device 2-1 determined as requiring maintenance is displayed in red. This is indicated by hatching in FIGS. 4a to 4c. In the example shown in FIG. 4b, the wireless communication devices 2-2 to 2-4 determined as not requiring maintenance are displayed in blue. These are shown without hatching in FIGS. 4a to 4c.

Furthermore, the addition unit 1024 of the present embodiment has a function of visually displaying the range in which the mobile device 71 can appropriately receive radio waves based on various types of information including, for example, locations of the wireless communication devices 2-1 to 2-4, information indicating whether maintenance is required, and radio wave strength. In the example shown in FIG. 4b, the region R1 is indicated by a broken line. The region R1 is an area where the mobile device 71 can appropriately receive radio waves from the wireless communication device 2. Based on the display of the region R1, it can be seen that the radio wave conditions of the mobile device 71 is poor in the vicinity of the wireless communication device 2-1.

The predetermined map thus created is information for managing the state of the wireless communication device 2. The predetermined map created in this manner is provided from the management apparatus 10 to the administrator. The method of providing an image to a user may include, for example, displaying a map on the display device 11 of the management apparatus 10. The method of providing an image to a user may also include displaying a map on the user's mobile device 71 outside of the facility 80, for example, via a network such as the Internet. In this manner, information provided by the management apparatus 10 can be notified to an administrator or a user by various methods.

Furthermore, the addition unit 1024 may provide recommendation information to the user. The recommendation information indicates an increase or decrease in the wireless communication devices 2. For example, when the radio wave condition of a specific region is poor based on the region R1 shown in FIG. 4b, the addition unit 1024 may display the specific region on the map as an expansion candidate region.

FIG. 4c schematically shows a map. In FIG. 4c, maintenance is performed on the wireless communication device 2-1 from the state of FIG. 4b. FIG. 4c reflects that the wireless communication device 2-5 is added.

In the example shown in FIG. 4c, the addition unit 1024 updates the display of the wireless communication device 2-1 from red to blue at the timing when the determination unit 1021 determines that the maintenance of the wireless communication device 2-1 is not required.

The expansion of the wireless communication device 2-5 is reflected on the map by, for example, an update process performed at a predetermined timing. After the expansion of the wireless communication device 2-5 is reflected on the map, the information on maintenance is reflected on the map at the timing when the management apparatus 10 acquires the information on maintenance of the wireless communication device 2-4 from the terminal 40.

The addition unit 1024 of the present embodiment displays the region R2. The region R2 indicates a range in which the mobile device 71 can appropriately receive radio waves from the wireless communication device 2. In the region R2, the improvement of the state of the wireless communication device 2-1 and the addition of the wireless communication device 2-5 are reflected. The region R2 is a range surrounded by a broken line in the drawings. Based on the display of the region R2, it can be seen that the radio wave condition of the mobile device 71 is improved around the intersection.

It should be noted that FIGS. 4a to 4c illustrate a planar map for convenience of description. However, the predetermined map may be a three-dimensional map. That is, the predetermined map may be a dynamic map. The dynamic map may reflect the real situation of the road R and may have high precision height information.

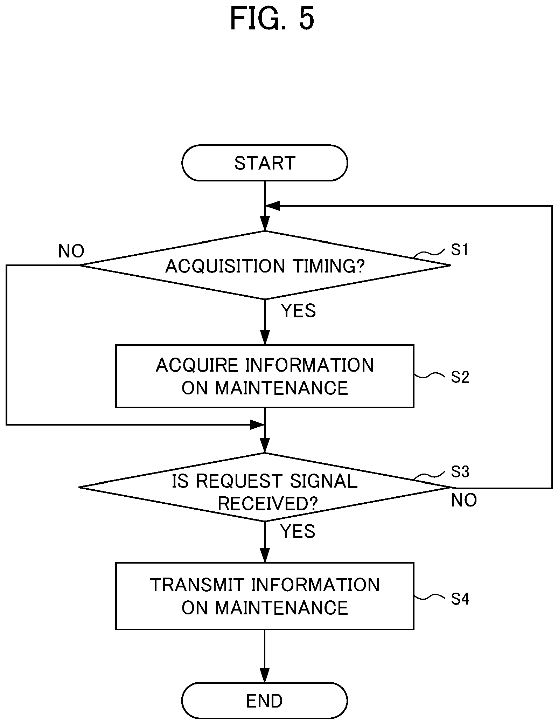

Next, the flow of the processing of the wireless tag 3 will be described with reference to FIG. 5. FIG. 5 is a flowchart showing a flow of processing of the wireless tag 3 as the information processing apparatus of the present embodiment.

In step S1, the wireless tag 3 determines whether or not it is an acquisition timing for acquiring information on maintenance. For example, when a predetermined time has elapsed since the information on maintenance was last acquired, it is determined as the acquisition timing. When it is the acquisition timing (YES), the processing proceeds to step S2. When it is not the acquisition timing (NO), the processing proceeds to step S3.

In step S2, the wireless tag 3 acquires information on maintenance from the wireless communication device 2. The information on maintenance is, for example, device information and radio wave intensity. It should be noted that, when the device information has already been acquired, only the information of the radio wave strength may be acquired as information on maintenance. It should also be noted that the vehicle 4 mounting the wireless tag 3 acquires information on maintenance from the wireless tag 3 while traveling at a constant speed.

In step S3, the wireless tag 3 determines whether or not a request signal has been received from the terminal 40 via the communication unit 31. The request signal in the present embodiment is a signal requesting the transmission of information on maintenance to the wireless tag 3. When the request signal transmitted from the terminal 40 has been received (YES), the processing proceeds to step S4. When the request signal has not been received (NO), the processing returns to step S1.

In step S4, the wireless tag 3 transmits information on maintenance to the terminal 40 that has transmitted the request signal. For example, the wireless tag 3 reads, from the storage unit 33, information on maintenance including device information and radio wave strength. Then, the wireless tag 3 transmits the information on maintenance to the terminal 40 which has transmitted the request signal. It should be noted that the wireless tag 3 may include a battery. In this case, the control unit 32 of the wireless tag 3 is driven by the power supplied from the battery. Furthermore, the wireless tag 3 may also have a function of generating power based on signals transmitted from the outside. The signal transmitted from the outside is, for example, a request signal transmitted from the terminal 40. In this case, the control unit 32 of the wireless tag 3 generates power based on a signal transmitted from the outside. The control unit 32 is driven by the generated power.

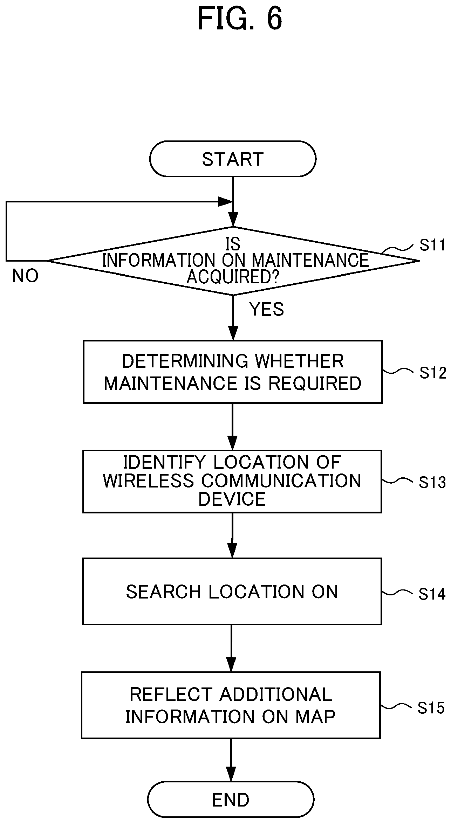

Next, the flow of processing of the management apparatus 10 will be described with reference to FIG. 6. FIG. 6 is a flowchart showing a flow of processing of the management apparatus 10 according to the present embodiment.

In step S11, the management apparatus 10 determines whether or not the information on maintenance has been acquired from the terminal 40. When the information on maintenance is newly acquired from the terminal 40 (YES), the processing proceeds to step S12. When the information on maintenance is not newly acquired (NO), the processing loops to step S11.

In step S12, the determination unit 1021 determines whether or not maintenance is required for the wireless communication device 2 based on the acquired information on maintenance. The determination unit 1021 acquires a determination result. The determination result here is information indicating whether or not maintenance is required.

In step S13, the identification unit 1022 identifies the location of the wireless communication device 2 for which the necessity of maintenance has been determined. The location of the wireless communication device 2 is identified based on the device information as described above. Furthermore, in the present embodiment, the wireless communication device 2 and the information on maintenance of the wireless communication device 2 are associated with each other, and the associated information is stored in the storage unit 103.

In step S14, the search unit 1023 refers to the predetermined map and searches for the location identified by the identification unit 1022.

In step S15, the addition unit 1024 performs processing of reflecting the determination result by the determination unit 1021 as additional information at a predetermined location on the map searched by the search unit 1023.

According to the present embodiment, the resin container 5 accommodates cables such as the communication line 6 and the power line 7. The resin container 5 includes the container body 52, the lid 53, and the wireless tag 3. The container body 52 has an opening 51 which opens upward. The lid 53 closes the opening 51. The wireless tag 3 is disposed on the lid 53 or on the container body 52. The wireless tag 3 functions as an information processing apparatus capable of wirelessly communicating with the terminal 40 as an external apparatus. The wireless tag 3 acquires information on maintenance of the wireless communication device 2 disposed inside the container body 52 from the wireless communication device 2 and holds the information. The wireless tag 3 transmits information on maintenance to the terminal 40. In this manner, by providing the wireless tag 3 on the lid 53 or the container body 52 of the resin container 5, it is possible to efficiently manage the state of the wireless communication device 2 installed in the underground space.

Furthermore, the wireless tag 3 acquires information on maintenance from the wireless communication device 2 at a predetermined timing. With such a configuration, information necessary for determining whether maintenance of the wireless communication device 2 is required can be acquired at an appropriate timing.

Furthermore, the information on maintenance includes the device information relating to the wireless communication device 2, and the radio wave strength when the wireless communication device 2 communicates with the mobile device 71. With such a configuration, it is possible to appropriately determine whether or not maintenance of the wireless communication device 2 is required by using the radio wave intensity of the wireless communication device 2, while identifying the wireless communication device 2 based on the device information.

Furthermore, the terminal 40 is mounted on the vehicle 4. The terminal 40 moves as the vehicle 4 moves. The wireless tag 3 transmits the information on maintenance in response to a request from the terminal 40. With such a configuration, since the terminal 40 is moved by the movement of the vehicle 4, it is possible to collect the information on maintenance of the wireless communication device 2 easily and efficiently over a wide range.

Furthermore, the moving body on which the terminal 40 is mounted is the vehicle 4. With such a configuration, since the vehicle 4 travels on the road R, it is possible to efficiently collect the information on maintenance of the wireless communication device 2 in the vicinity of the road R.

The vehicle 4 assumes a dedicated maintenance car. However, the present invention is not limited thereto. For example, the vehicle 4 may be a vehicle owned by an individual or a corporation. Furthermore, the vehicle 4 may be a car rental to an individual or a corporation for a certain period of time. Moreover, the vehicle 4 may be a vehicle used in a service in which a specific vehicle is shared among registered members. By using these vehicles, it is possible to collect the information from the wireless tag 3 inexpensively and efficiently as compared with a mode in which such a dedicated maintenance car is used. These vehicles and maintenance cars may also be used in combination.

The wireless communication system 1 according to the present embodiment includes the plurality of resin containers 5. The wireless communication system 1 includes the management apparatus 10. The management apparatus 10 associates and stores the information on maintenance acquired from the terminal 40 as an external apparatus for each of the wireless communication devices 2 disposed at different locations. With such a configuration, it is possible to aggregate the states of the plurality of wireless communication devices 2. Therefore, even when the target area is wide, it is still possible to maintain an appropriate state of the radio wave conditions of the wireless communication device 2 efficiently and easily.

Furthermore, the management apparatus 10 includes the determination unit 1021, the identification unit 1022, the search unit 1023, and the addition unit 1024. The determination unit 1021 determines whether or not maintenance is required for the wireless communication device 2 based on the information on maintenance. The identification unit 1022 identifies the location where the wireless communication device 2 is disposed based on the information on maintenance. The search unit 1023 refers to a predetermined map and searches for a location identified by the identification unit 1022. The addition unit 1024 adds the determination result by the determination unit 1021 to the location on the predetermined map searched by the search unit 1023. With such a configuration, it is possible for the wireless communication system 1 to visualize the information for appropriately determining whether or not maintenance is required for the wireless communication device 2. Thus, it is possible to efficiently maintain and manage the appropriate state of the wireless communication device 2.

The predetermined map is a map in which road information having a situation which changes every moment is updated in real time. With such a configuration, it is possible for the wireless communication system 1 to efficiently manage the states of the wireless communication devices 2 installed around the road in accordance with the road information.

While an embodiment of the present invention has been described above, the present invention is not limited to the above-described embodiment. In addition, the advantageous effects described in the present embodiment only list the most suitable effects resulting from the present invention, and the advantageous effects according to the present invention are not limited to those described in the present embodiment.

For example, in the above embodiment, an example in which the terminal 40 as an external apparatus is mounted on the vehicle 4 has been described. However, the present invention is not limited thereto. For example, an external apparatus may be mounted on an unmanned flight vehicle, such as a drone.

For example, in the above embodiment, the wireless tag 3 as an information processing apparatus is described as functioning as a configuration for receiving the information on maintenance from the wireless communication device 2. However, the wireless tag 3 may additionally receive the information on maintenance from another device. In such a configuration, the control unit 42 of the terminal 40 in the vehicle 4 may transmit to the wireless tag 3 signal qualities and throughputs (expected transmission rate) of a plurality of wireless communication devices 2 associated with the positional coordinates based on the change in time of the radio wave strength of the communication radio waves received from the device information and the wireless communication device 2 described above. In this case, the wireless tag 3 may store the received signal qualities and throughputs of the plurality of wireless communication devices 2 in the storage unit 33. As a result, it is possible for the wireless communication system 1 to acquire the history of the past communication state of the wireless communication device 2 by the vehicle 4.

For example, in the above-described embodiment, an example has been described in which the management apparatus 10 is disposed at a different location from the terminal 40. However, the present invention is not limited thereto. For example, the function of the management apparatus 10 may be added to the terminal 40 mounted on the vehicle 4. As a result, it is possible for the vehicle 4 as a moving body to create a map. By providing the display device 11 in the vehicle 4, it is also possible to perform a maintenance operation while confirming the map.

### EXPLANATION OF REFERENCE NUMERALS

1 wireless communication system
2 wireless communication device
3 wireless tag (information processing apparatus)
4 vehicle
5 resin container
40 terminal
51 opening
52 container body
53 lid
6 communication line
7 power line
21 communication unit
22 control unit
23 storage unit
31 communication unit
32 control unit
33 storage unit
41 communication unit
42 control unit
43 storage unit
71 mobile device
1021 determination unit
1022 identification unit
1023 search unit
1024 addition unit

## Claims

1. A resin container accommodating a cable, the resin container comprising:
a container body including an opening that opens upward;
a lid that closes the opening; and
an information processing apparatus that detects a change of the resin container from an initial installation state, and sends a detection result to outside.

2. The resin container according to claim 1, further comprising a management apparatus provided inside or outside of the resin container, and examining a change in a state of the resin container based on the detection result.

3. The resin container according to claim 2, wherein
the information processing apparatus is communicable with an external apparatus, and acquires and retains information on maintenance of at least one wireless communication device disposed inside of the container body from the wireless communication device, and
the information processing apparatus sends the information on maintenance to the external apparatus.

4. The resin container according to claim 3, wherein the information processing apparatus acquires the information on maintenance from the wireless communication device at a predetermined timing.

5. The resin container according to claim 3 or 4, wherein the information on maintenance includes device information related to the wireless communication device and a radio wave strength upon communication between the wireless communication device and a mobile device.

6. The resin container according to any one of claims 3 to 5, wherein
the external apparatus is mounted on a moving body, and moves accompanying movement of the moving body, and
the information processing apparatus sends the information on maintenance in response to a request from the external apparatus.

7. The resin container according to claim 6, wherein the moving body is a vehicle.

8. A wireless communication system including a plurality of the resin containers according to any one of claims 3 to 7, the system comprising:
a management apparatus that stores the information on maintenance acquired from the external apparatus to be associated with each of the wireless communication devices disposed at different locations.

9. The wireless communication system according to claim 8, wherein the management apparatus includes:
a determination unit that determines whether maintenance is required for a wireless communication device based on the information on maintenance;
an identification unit that identifies a location at which the wireless communication device is disposed based on the information on maintenance;
a search unit that refers to a predetermined map, and searches the location identified by the identification unit; and
an addition unit that adds a determination result by the determination unit to a location on the predetermined map searched by the search unit.

10. The wireless communication system according to claim 9, wherein the predetermined map is a map in which road information having a situation which changes for every moment is updated in real time.
